# EUROPÄISCHE PATENTANMELDUNG

(11) **EP 2 351 671 A1**
(43) Veröffentlichungstag der Anmeldung: **03.08.2011**
(21) Anmeldenummer: 10191924.9
(22) Anmeldetag: 19.11.2010
(51) Int. Cl.: B60R 21/38

(54) **Fronthaubenscharnier zur gelenkigen Anordnung einer Fronthaube an einem Fahrzeug**

(71) Anmelder: ISE Automotive GmbH, 51702 Bergneustadt (DE)
(72) Erfinder: Olfert, Johann, 51702, Bergneustadt (DE)
(74) Vertreter: Wenzel & Kalkoff

(57) **Zusammenfassung**

Die Erfindung betrifft ein Fronthaubenscharnier (1) zur gelenkigen Anordnung einer Fronthaube an einem Fahrzeug, mit einem mit einem Karosseriebauteil verbindbaren unteren Scharnierflügel (2) und einem mit der Fronthaube verbindbaren oberen Scharnierflügel (3), wobei der obere Scharnierflügel (2) und der untere Scharnierflügel (3) gelenkig miteinander verbunden sind, wobei der obere Scharnierflügel (3) ein gelenkig mit dem unteren Scharnierflügel (2) verbundenes Unterteil (5) und ein an der Fronthaube anordbares Oberteil (4) aufweist, wobei das Unterteil (5) und das Oberteil (4) gelenkig miteinander verbunden sind. Eine Relativbewegung des Oberteils (4) gegenüber dem Unterteil (5) aus einer Normallage in eine Crashlage erfolgt erst nach Trennung einer das Oberteil an dem Unterteil festlegenden Verbindung (6) durch eine Trennvorrichtung. Um ein Fronthaubenscharnier der eingangs genannten Art bereitzustellen, das sich besonders kostengünstig herstellen lässt, eine hohe Funktionssicherheit aufweist sowie im Normalbetrieb eine hohe Stabilität aufweist, ist vorgesehen, dass das Oberteil (4) in der Normallage über ein Anschlagelement an einem Begrenzungselement des Unterteils (5) anliegt, wobei die Anlagefläche im Wesentlichen parallel zur Verstellrichtung des Oberteils (4) gegenüber dem Unterteil (5) verläuft.

## Beschreibung

Die Erfindung betrifft ein Fronthaubenscharnier zur gelenkigen Anordnung einer Fronthaube an einem Fahrzeug, mit
- einem mit einem Karosseriebauteil verbindbaren unteren Scharnierflügel und
- einem mit der Fronthaube verbindbaren oberen Scharnierflügel, wobei
- der obere Scharnierflügel und der untere Scharnierflügel zur Verstellung der Fronthaube zwischen einer Schließposition und einer Öffnungsposition gelenkig miteinander verbunden sind, wobei
- der obere Scharnierflügel ein gelenkig mit dem unteren Scharnierflügel verbundenes Unterteil und ein an der Fronthaube anordbares Oberteil aufweist, wobei das Unterteil und das Oberteil gelenkig miteinander verbunden sind, und wobei eine Relativbewegung des Oberteils gegenüber dem Unterteil aus einer Normallage in eine Crashlage erst nach Trennung einer das Oberteil an dem Unterteil festlegenden Verbindung durch eine Trennvorrichtung erfolgt.

Fronthaubenscharniere der eingangs genannten Art sind bereits in vielfältigen Ausführungsformen aus dem Stand der Technik bekannt. Sie dienen zur schwenkbaren Aufnahme der Fronthaube, bspw. einer Motorhaube eines Kraftfahrzeuges und können zwischen einer Schließposition, in der die Haube, in der Regel gesichert durch ein Haubenschloss, einen Motorraum überdeckt und einer Öffnungsposition, welche den Zugang zu einem unter der Fronthaube angeordneten Motorraum ermöglicht, verstellt werden.

Zur Verringerung der Schwere von Verletzungen bei Unfällen, die sich mit Personen ereignen, werden zunehmend höhere Anforderungen an den Fußgängerschutz gestellt, wobei gewährleistet werden muss, dass vorgeschriebene HIC-Werte (Kopfaufprall auf der Fronthaube) erreicht werden. So werden, wenn zwischen dem Motorblock und der darüber angeordneten Fronthaube nicht genügend Raum zur Energieabsorbierung beim Aufprall durch Deformation der Fronthaube zur Verfügung steht, vermehrt aktive Systeme eingesetzt, bei denen sich die Fronthaube im Falle eines Unfalls aufstellt, um zwischen dem Motorblock und der Fronthaube einen geeignet großen Verformungsraum zur Verfügung zu stellen.

Bekannte Systeme, die eine Aufstellung der Fronthaube bewirken, weisen in der Regel einen sehr komplexen Aufbau auf, wobei insbesondere Mehrgelenkscharniere zum Einsatz kommen, welche eine Translations- und eine Schwenkbewegung der Fronthaube beim Übergang zwischen der Schließposition und der Öffnungsposition kombinieren. Damit auch derartige Fronthaubenscharniere im Ernstfall einen ergänzenden Verformungsraum bereitstellen, weisen diese äußerst komplexe Ausgestaltungen auf, die einen großen Bauraum zur Folge haben. Darüber hinaus können derartige Fronthaubenscharniere eine zumindest geringe Instabilität aufweisen, welche zu einer zu großen Bewegungsfreiheit der Fronthaube in Y-Richtung, d. h. quer zum Fahrzeug, zur Folge hat, was wiederum zu einem Flattern bzw. Schwimmen der Fronthaube führt.

Ein gattungsgemäßes Fronthaubenscharnier ist bspw. aus der EP 1818 224 A1 bekannt, wobei ein oberer Scharnierflügel über einen Scherstift festgelegt ist und erst ein Trennen des Scherstifts ein Aufstellen im Crashfall bewirkt. Die Festlegung über einen Scherstift weist dabei ebenfalls den Nachteil auf, dass das Fronthaubenscharnier in Y-Richtung eine zu große Bewegungsfreiheit besitzt.

Der Erfindung liegt die Aufgabe zugrunde, ein Fronthaubenscharnier der eingangs genannten Art bereitzustellen, das sich besonders kostengünstig herstellen lässt, eine hohe Funktionssicherheit aufweist sowie im Normalbetrieb eine hohe Stabilität aufweist.

Die Erfindung löst die Aufgabe durch ein Fronthaubenscharnier mit den Merkmalen des Anspruchs 1. Vorteilhafte Weiterbildungen der Erfindung sind in den abhängigen Ansprüchen angegeben.

Wesentlich für das erfindungsgemäße Fronthaubenscharnier ist, dass der obere Scharnierflügel ein gelenkig mit dem unteren Scharnierflügel verbundenes Unterteil sowie ein an der Fahrzeughaube anordbares Oberteil aufweist. Das Unterteil und das Oberteil, welche gemeinsam die wesentlichen Bauteile des oberen Scharnierflügels bilden, sind ihrerseits gelenkig miteinander verbunden, wobei im Normalbetrieb das Oberteil und das Unterteil miteinander verbunden sind, so dass eine Verstellung einer Motorhaube gegenüber einer mit dem unteren Scharnierflügel verbundenen Fahrzeugkarosserie durch alleinige Verschwenkung des oberen, das Oberteil und Unterteil aufweisenden Scharnierflügels gegenüber dem unteren Scharnierflügel erfolgt. Die Ausgestaltung der Verbindung zwischen dem oberen Scharnierflügel und dem unteren Scharnierflügel bestimmt dabei die Verstellbewegung der Fronthaube gegenüber der Fahrzeugkarosserie.

Im Normalbetrieb des Fahrzeugs sind das Oberteil und das Unterteil, wie bereits zuvor dargestellt, derart miteinander verbunden, dass keine Relativbewegung des Oberteils gegenüber dem Unterteil erfolgen kann. Eine solche Bewegung ist nur im Crashfall erforderlich und setzt voraus, dass die das Oberteil an dem Unterteil festlegende Verbindung zuvor durch eine Trennvorrichtung aufgetrennt wird. Nach Aufhebung der Verbindung besteht dann die Möglichkeit, das Oberteil gegenüber dem Unterteil aus der Normallage in die Crashlage zu verstellen. Hierzu ist die Trennvorrichtung derart ausgebildet, dass sie die aus der Ausgestaltung der Verbindung resultierende Mindestkraft bereitstellt.

Kennzeichnend für die Erfindung ist, dass das Oberteil in der Normallage über ein Anschlagelement an einem Begrenzungselement des Unterteils anliegt, wobei die Anlagefläche zwischen dem Begrenzungselement und dem Anschlagelement im Wesentlichen parallel zur Verstellrichtung des Oberteils gegenüber dem Unterteil verläuft. Die Verwendung eines Begrenzungselements sowie eines Anschlagelements gewährleistet in besonderer Weise einen stabilen Aufbau des Fronthaubenscharniers, wobei insbesondere in Y-Richtung des Kraftfahrzeuges unerwünschten Bewegungen der Motorhaube vorgebeugt wird. Das Verhalten und die Stabilität des erfindungsgemäßen Fronthaubenscharniers entspricht dem herkömmlicher Fronthaubenscharniere mit starren oberen Scharnierflügeln, die nicht die Eignung aufweisen, einen zusätzlichen Verformungsbereich bereitzustellen. Aufgrund des Kontaktes von Begrenzungselement und Anschlagfläche wird eine Relativbewegung des Oberteils gegenüber dem Unterteil, welche ein Flattern der Motorhaube zur Folge hätte, zuverlässig ausgeschlossen. Gleichzeitig wird jedoch aufgrund der Ausrichtung der Kontaktfläche gewährleistet, dass im Gefahrenfall eine störungsfreie Verlagerung des Oberteils erfolgen kann. Besonders vorteilhafterweise weist das Begrenzungselement und/oder das Anschlagelement eine Beschichtung, insbesondere eine Kunststoffbeschichtung auf, die Klappergeräusche im Betrieb verhindert.

Die Festlegung des Oberteils an dem Unterteil kann grundsätzlich in beliebiger Weise erfolgen. Nach einer Weiterbildung der Erfindung ist die Verbindung jedoch durch ein Zugelement gebildet. Ein Zugelement weist den Vorteil auf, dass sich dieses in besonders einfacher Weise, bevorzugt spielfrei an Ober- und Unterteil anordnen lässt, so dass eine hohe Stabilität der Verbindung von Ober- und Unterteil im Normalbetrieb erreicht wird. Über die Ausgestaltung des Zugelements besteht ferner in einfacher Weise die Möglichkeit, Fronthaubenscharniere mit unterschiedlichen Auslösecharakteristiken bereitzustellen. Dies kann bspw. über die Materialwahl des Zugelements und/oder über dessen Ausgestaltung erfolgen. Bei ansonsten identischem Aufbau lassen sich somit in einfacher Weise Fronthaubenscharniere erstellen, die an die unterschiedlichen Anforderungen der jeweiligen Fahrzeughersteller angepasst sind, ohne dass hierfür umfangreiche Anpassungen am Fronthaubenscharnier vorgenommen werden müssen. Darüber hinaus erlaubt die Verlagerbarkeit des Oberteils gegenüber dem Unterteil im Falle eines Crashs eine im Übrigen freie Gestaltbarkeit des Fronthaubenscharniers, so dass dieses entsprechend der gegebenen Fahrzeuganforderungen bspw. als Eingelenk-, aber auch als Mehrgelenkscharnier ausgebildet sein kann. Im Falle eines Crashs gewährleistet die Verlagerung des Oberteils gegenüber dem Unterteil einen ausreichend großen Verformungsraum unterhalb der Motorhaube zum Abbau der beim Aufprall einer Person auf die Fronthaube auftretenden Energie.

Die Verbindung des Oberteils mit dem Unterteil über das Zugelement ist im Normalbetrieb dergestalt, dass das Oberteil an dem Unterteil festgelegt ist. Eine Trennung der Verbindung, d. h. eine Trennung des Zugelements erfolgt, ausgelöst durch entsprechende Sensoren, durch eine Trennvorrichtung, die derart auf das Fronthaubenscharnier wirkt, dass die Verbindung zwischen dem Oberteil und dem Unterteil durch Zerstörung des Zugelements zuverlässig aufgelöst wird. Die Verwendung der Trennvorrichtung gewährleistet somit in besonders zuverlässiger Weise, dass unabhängig von auftretenden Belastungen der Fronthaube, allein in Folge eines sensorisch erfassten Crashfalls das Fronthaubenscharnier in die Crashlage bewegt werden kann.

Die Ausgestaltung der Verbindung des Zugelements mit dem Oberteil und Unterteil ist grundsätzlich frei wählbar. So kann bspw. über die Positionierung des Zugelements an Oberteil und Unterteil Einfluss auf die für die Auflösung der Verbindung erforderliche Kraft genommen werden, wobei bspw. Hebeleffekte, resultierend aus dem Abstand des Kraftangriffspunkts der Trennvorrichtung zum Zugelement berücksichtigt werden können. Nach einer besonders vorteilhaften Ausgestaltung der Erfindung ist das Zugelement mit dem Oberteil und Unterteil verschraubt oder vernietet, wobei sich diese Verbindungen besonders einfach und kostengünstig sowie platzsparend realisieren lassen.

Gemäß einer weiteren Ausgestaltung der Erfindung weist das Zugelement eine Sollreißstelle auf, welche den Bereich des Zugelements definiert, an dem dieses im Falle einer durch die Trennvorrichtung aufgebrachten Kraft aufreißt. Die Ausbildung einer Sollreißstelle - die eine Art Sollbruchstelle darstellt - an dem Zugelement ermöglicht es, einen definierten Trennungsbereich festzulegen, an dem das Zugelement bei Erreichen einer durch die Sollreißstelle definierten Kraft aufreißt. Gleichzeitig wird trotzdem im Normalbetrieb eine hohe Y-Stabilität des Fronthaubenscharniers gewährleistet. Die Ausgestaltung der Sollreißstelle, welche in einfacher Weise eine Festlegung der zur Trennung erforderlichen Kraft ermöglicht, ist grundsätzlich frei wählbar. Nach einer besonders vorteilhaften Ausgestaltung der Erfindung ist die Sollreißstelle jedoch durch eine am Zugelement ausgebildete Querschnittsverjüngung gebildet. Eine entsprechende Ausgestaltung des Zugelements lässt sich besonders einfach und kostengünstig herstellen. Über den Querschnitt lässt sich dabei in einfacher Weise die zur Trennung erforderliche Kraft bestimmen. Ein entsprechendes Zugelement lässt sich besonders kostengünstig herstellen, so dass auch ein unter Verwendung eines derartigen Zugelements hergestelltes Fronthaubenscharnier besonders kostengünstig realisiert werden kann. Zusätzlich oder alternativ zur Ausbildung der Sollreißstelle am Zugelement durch eine Querschnittsverjüngung kann das Zugelement zu deren Bildung gemäß einer Weiterbildung der Erfindung im Bereich der Sollreißstelle eine Prägung und/oder Perforierung aufweisen, welche sich ebenfalls in einfacher Weise herstellen lässt und eine genaue Festlegung der Sollreißstelle am Zugelement ermöglicht.

Wesentlich für die Funktion des erfindungsgemäßen Fronthaubenscharniers ist die Verlagerung des Oberteils gegenüber dem Unterteil im Falle eines Crashs, um somit einen zusätzlichen Verformungsbereich zum Abbau von Energie bereitzustellen, wobei gleichzeitig im Normalbetrieb eine hohe Stabilität in Y-Richtung besteht. Nach einer besonders vorteilhaften Ausgestaltung der Erfindung ist dabei das Oberteil bei der Verstellung aus der Normallage in die Crashlage an dem Unterteil geführt. Eine entsprechende Führung, die grundsätzlich beliebig ausgebildet sein kann, gewährleistet in besonders zuverlässiger Weise eine kontrollierte Aufstellung des Oberteils gegenüber dem Unterteil, wobei die Fronthaube durch die Führung in eine definierte Crashlage verstellt wird, welche einen optimalen Fußgängerschutz bietet. Besonders vorteilhafterweise ist dabei das Oberteil an dem Unterteil über einen in einer Kulisse des Oberteils angeordneten und mit dem Unterteil verbundenen Bolzen geführt. Eine Kulissenführung gewährleistet in besonderem Maße eine Festlegung des Verlagerungsweges sowie der Crashlage und zeichnet sich dabei durch ihre hohe Zuverlässigkeit aus.

Die Ausgestaltung der Trennvorrichtung sowie deren Anbindung derart, dass sie im Crashfall auf das Zugelement eine dieses im Bereich der Sollreißstelle zerstörende Kraft aufbringt, ist grundsätzlich frei wählbar. Nach einer besonders vorteilhaften Ausgestaltung der Erfindung weist die Trennvorrichtung jedoch einen pyrotechnischen Aktuator mit einem im Crashfall herausschnellenden Kolbenelement auf, wobei der Aktuator derart ausgebildet und angeordnet ist, dass das Kolbenelement im Crashfall eine das Zugelement zerreißende Kraft bewirkt. Die Verwendung eines pyrotechnischen Aktuators zeichnet sich durch die geringe Reaktionszeit aus, die es ermöglicht, die Motorhaube im Bedarfsfall schlagartig aufzustellen. Ein Kolbenelement des pyrotechnischen Aktuators wirkt dabei derart auf das Zugelement, dass dieses im Bereich der Sollreißstelle auftrennt.

Die Anordnung des Aktuators derart, dass das Kolbenelement in Wirkverbindung mit dem Zugelement gelangt, ist dabei grundsätzlich beliebig, wobei auch eine Übertragung mittels geeigneter Hebel, aber auch eine direkte Einwirkung des Kolbenelements auf das Zugelement möglich ist. Nach einer besonders vorteilhaften Ausgestaltung der Erfindung gelangt das Kolbenelement jedoch im Crashfall mit dem Oberteil in Eingriff, wobei besonders vorteilhafterweise ein Eingriff im Bereich der Kulisse des Oberteils vorgesehen ist. Eine entsprechende Ausgestaltung der Erfindung ermöglicht es, in einfacher Weise, über den Abstand des Angriffspunkts des Kolbenelements mit dem Oberteil zum Zugelement, eine Festlegung der tatsächlich erforderlichen Kraft vorzunehmen. Diese Ausgestaltung der Erfindung zeichnet sich darüber hinaus dadurch aus, dass auf weitere Anbauteile, welche zusätzlichen Bauraum beanspruchen sowie zu erhöhten Kosten führen würden, verzichtet werden kann.

Nach einer besonders vorteilhaften Weiterbildung der Erfindung ist der pyrotechnische Aktuator derart ausgebildet, dass das Kolbenelement nicht allein zur Auflösung der Verbindung von Oberteil und Unterteil genutzt, sondern darüber hinaus dazu geeignet ist, das Kolbenelement aus der Normallage in die Crashlage zu verstellen. Gegebenenfalls kann auf ergänzende Aufstellelemente, wie bspw. geeignete Federelemente, verzichtet werden. Die sich hieraus ergebende Aufstellung erfolgt auch mit einer besonders kurzen Reaktionszeit, so dass ein besonders guter Fußgängerschutz erreicht werden kann.

Die gelenkige Verbindung des Oberteils und Unterteils kann grundsätzlich in beliebiger Weise ausgestaltet sein, wobei diese in Abhängigkeit von der geforderten Aufstellhöhe erfolgt. So kann die Verbindung zwischen Oberteil und Unterteil als Mehrgelenkscharnier ausgebildet sein. Nach einer besonders vorteilhaften Ausgestaltung der Erfindung sind das Oberteil und das Unterteil jedoch drehgelenkig miteinander verbunden, wodurch ein besonders einfacher und kostengünstiger Aufbau des Fronthaubenscharniers erreicht werden kann, wobei gleichzeitig die Aufstellung einen ausreichenden Fußgängerschutz gewährleistet.

Ein Ausführungsbeispiel der Erfindung wird nachstehend mit Bezug auf die Zeichnungen näher erläutert. In den Zeichnungen zeigen:
- Fig. 1: eine Seitenansicht einer Ausführungsform eines Fronthaubenscharniers in einer Normallage im geschlossenen Zustand;
- Fig. 2: eine Seitenansicht des Fronthaubenscharniers von Fig. 1 in einer Crashlage;
- Fig. 3: eine Draufsicht auf ein Zugelement des Fronthaubenscharniers von Fig. 1 und
- Fig. 4: eine perspektivische Ansicht des Fronthaubenscharniers von Fig. 1 in einer Zwischenlage zwischen Normallage und Crashlage.

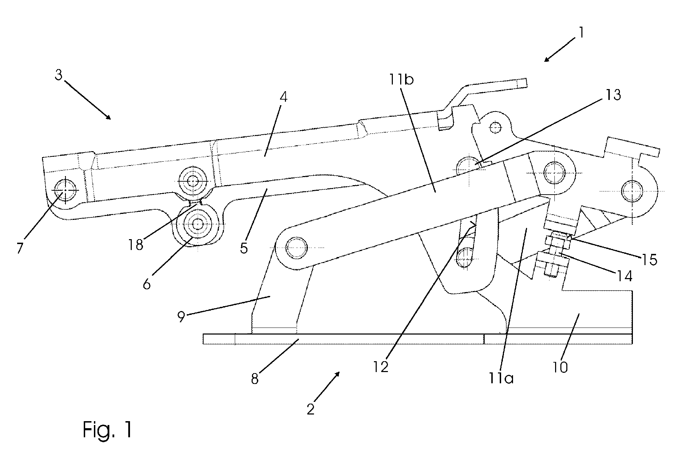

In Fig. 1 ist ein Ausführungsbeispiel eines Fronthaubenscharniers 1 in einer Seitenansicht dargestellt. Das Fronthaubenscharnier 1 weist einen unteren Scharnierflügel 2 und einen oberen Scharnierflügel 3 auf, die über zwei Lenker 11a, 11b gelenkig miteinander verbunden sind. Hierzu weist der untere Scharnierflügel 2 zwei sich im Wesentlichen senkrecht zu einer Grundplatte 8 erstreckende Stege 9, 10 auf, an denen jeweils ein Lenker 11a, 11b drehgelenkig angeordnet ist.

An ihren den Stegen 9, 10 abgewandten Enden sind die Lenker 11a, 11b jeweils wiederum drehgelenkig mit einem Unterteil 5 des oberen Scharnierflügels 3 verbunden. Zur Einstellung der in Fig. 1 dargestellten Schließlage des Fronthaubenscharniers 1 ist an dem Steg 10 eine Stellschraube 14 angeordnet, welche in der Schließlage mit einer Anschlagfläche 15 an dem Unterteil 5 des oberen Scharnierflügels 3 anliegt. Über die Einschraubtiefe der Stellschraube 14 in den Steg 10 kann somit die Lage der Fronthaube in der Schließstellung des Fronthaubenscharniers 1 festgelegt werden.

Der obere Scharnierflügel 3 wird aus dem Unterteil 5 und einem Oberteil 4 gebildet, die über einen Gelenkbolzen 7 drehgelenkig miteinander verbunden sind. Das Oberteil 4 dient zur Anbindung des Fronthaubenscharniers 1 an einer hier nicht dargestellten Fronthaube und ermöglicht somit eine verschwenkbare Anordnung an einer hier nicht dargestellten Fahrzeugkarosserie, die über die Grundplatte 8 mit dem unteren Scharnierflügel 2 verbunden ist. Im Normalbetrieb ist das Unterteil 5 über das Zugelement 6 an dem Oberteil 4 festgelegt. Eine relative Verlagerung des Unterteils 5 gegenüber dem Oberteil 4 kann nicht erfolgen, solange nicht die durch das Zugelement 6 bestehende Verbindung aufgehoben wird. Das Zugelement ist dabei mittels Nieten an dem Unterteil 5 und dem Oberteil 4 verbunden.

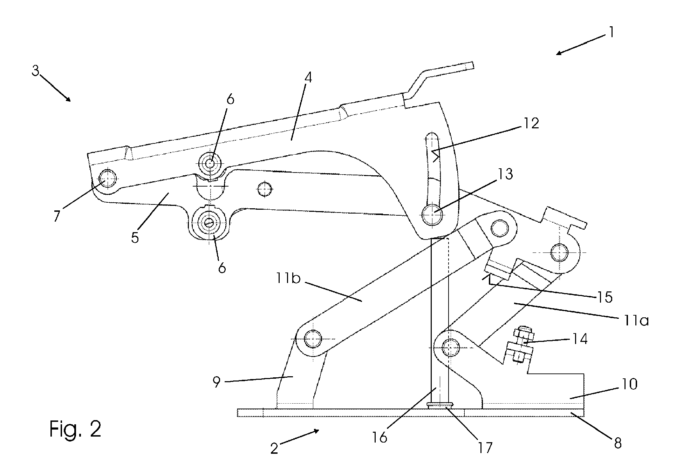

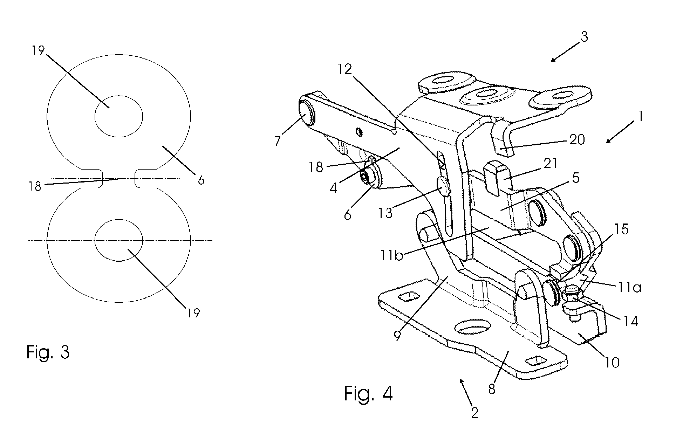

Zur Verlagerung des Oberteils 4 gegenüber dem Unterteil 5 im Falle eines Crashs in die in Fig. 2 dargestellte Crashlage des Oberteils 4 gegenüber dem Unterteil 5 dient ein pyrotechnischer Aktuator 17, welcher ein Kolbenelement 16 aufweist, welches im Bereich einer Kulisse 12 des Oberteils 4 angreift und aufgrund der aufgebrachten Kraft eine Trennung des Zugelements 6 im Bereich deren Sollreißstelle 18 bewirkt. Die Sollreißstelle 18 ist dabei durch eine Querschnittsverjüngung gebildet, welche in Folge einer definiert aufgebrachten Kraft aufreißt und somit eine Verstellung des Oberteils 4 gegenüber dem Unterteil 5 um den Gelenkpunkt 7 ermöglicht (vgl. Fig. 3).

In der in Fig. 2 dargestellten Crashlage ist zudem eine Verlagerung des oberen Scharnierflügels gegenüber dem unteren Scharnierflügel 2 erfolgt. Grundsätzlich ist diese nicht erforderlich. Zur Erreichung der Crashlage ist es lediglich erforderlich, eine Verstellung des Oberteils 4 gegenüber dem Unterteil 5 zu bewirken. Die Crashlage wird dabei durch die Kulisse 12 sowie ein durch die Kulisse 12 hindurchragenden und am Unterteil 5 angeordneten Bolzen festgelegt.

Zur Verbesserung der Stabilität des Fronthaubenscharniers 1 in Y-Richtung, dass heißt Fahrzeugquerrichtung, welche sich bei den Fig. 1 und 2 durch die Bildebene erstreckt, ist an dem Oberteil 4 ein Anschlagelement 20 und an dem Unterteil 5 ein Begrenzungselement 21 angeordnet, welche in der Normallage mit einer Fläche aneinanderliegen, die im Wesentlichen parallel zur Aufstellrichtung des Oberteils 4 gegenüber dem Unterteil 5 bzw. senkrecht zur Y-Richtung des Fronthaubenscharniers 1 in der Einbaulage verläuft. Über die gegenseitige Abstützung von Anschlagelement 20 und Begrenzungselement 21 wird die Stabilität in Y-Richtung in ergänzender Weise gesteigert, wobei eines der Elemente 20, 21 zur Vermeidung von Klappergeräuschen eine Kunststoffbeschichtung aufweisen kann (vgl. Fig. 4).

## Patentansprüche

1. Fronthaubenscharnier zur gelenkigen Anordnung einer Fronthaube an einem Fahrzeug, mit
- einem mit einem Karosseriebauteil verbindbaren unteren Scharnierflügel (2) und
- einem mit der Fronthaube verbindbaren oberen Scharnierflügel (3), wobei
- der obere Scharnierflügel (3) und der untere Scharnierflügel (2) zur Verstellung der Fronthaube zwischen einer Schließposition und einer Öffnungsposition gelenkig miteinander verbunden sind, wobei
- der obere Scharnierflügel (3) ein gelenkig mit dem unteren Scharnierflügel (2) verbundenes Unterteil (5) und ein an der Fronthaube anordbares Oberteil (4) aufweist, wobei das Unterteil (5) und das Oberteil (4) gelenkig miteinander verbunden sind, und wobei eine Relativbewegung des Oberteils (4) gegenüber dem Unterteil (5) aus einer Normallage in eine Crashlage erst nach Trennung einer das Oberteil an dem Unterteil festlegenden Verbindung (6) durch eine Trennvorrichtung (17) erfolgt,
**dadurch gekennzeichnet, dass**
das Oberteil (4) in der Normallage über ein Anschlagelement (20) an einem Begrenzungselement (21) des Unterteils (5) anliegt, wobei die Anlagefläche im Wesentlichen parallel zur Verstellrichtung des Oberteils (4) gegenüber dem Unterteil (5) verläuft.

2. Fronthaubenscharnier nach Anspruch 1, **dadurch gekennzeichnet, dass** das Anschlagelement (20) und/oder das Begrenzungselement (21) eine Beschichtung, insbesondere eine Kunststoffbeschichtung aufweist.

3. Fronthaubenscharnier nach Anspruch 1 oder 2, **dadurch gekennzeichnet, dass** die das Oberteil (4) an dem Unterteil (5) festlegende Verbindung durch ein mit dem Oberteil (4) und dem Unterteil (5) verbundenes Zugelement (6) gebildet ist.

4. Fronthaubenscharnier nach einem der vorhergehenden Ansprüche, **dadurch gekennzeichnet, dass** das Zugelement mit dem Oberteil (4) und Unterteil (5) verschraubt oder vernietet ist.

5. Fronthaubenscharnier nach einem der vorhergehenden Ansprüche, **dadurch gekennzeichnet, dass** das Zugelement (6) eine Sollreißstelle aufweist.

6. Fronthaubenscharnier nach einem der vorhergehenden Ansprüche, **dadurch gekennzeichnet, dass** die Sollreißstelle durch eine am Zugelement (6) ausgebildete Querschnittsverjüngung (18) gebildet ist.

7. Fronthaubenscharnier nach einem der vorhergehenden Ansprüche, **dadurch gekennzeichnet, dass** das Zugelement im Bereich der Sollreißstelle eine Prägung und/oder Perforierung aufweist.

8. Fronthaubenscharnier nach einem der vorhergehenden Ansprüche, **dadurch gekennzeichnet, dass** das Oberteil (4) bei der Verstellung aus der Normallage in die Crashlage an dem Unterteil (5) geführt ist.

9. Fronthaubenscharnier nach einem der vorhergehenden Ansprüche, **dadurch gekennzeichnet, dass** das Oberteil (4) an dem Unterteil (5) über ein in einer Kulisse (12) des Oberteils (4) angeordneten und mit dem Unterteil (5) verbundenen Bolzen (13) geführt ist.

10. Fronthaubenscharnier nach einem der vorhergehenden Ansprüche, **dadurch gekennzeichnet, dass** die Trennvorrichtung einen pyrotechnischen Aktuator (17) mit einem im Crashfall herausschnellenden Kolbenelement (16) aufweist, wobei der Aktuator (17) derart ausgebildet und angeordnet ist, dass das Kolbenelement (16) im Crashfall eine das Zugelement (6) zerreißende Kraft bewirkt.

11. Fronthaubenscharnier nach einem der vorhergehenden Ansprüche, **dadurch gekennzeichnet, dass** das Kolbenelement (16) im Crashfall mit dem Oberteil (5), insbesondere im Bereich dessen Kulisse (12) in Eingriff gelangt.

12. Fronthaubenscharnier nach einem der vorhergehenden Ansprüche, **dadurch gekennzeichnet, dass** das Kolbenelement (16) eine Verstellung des Oberteils (4) aus der Normallage (5) in die Crashlage bewirkt.

13. Fronthaubenscharnier nach einem der vorhergehenden Ansprüche, **dadurch gekennzeichnet, dass** das Oberteil (4) und das Unterteil (5) drehgelenkig miteinander verbunden sind.
